# EUROPÄISCHE PATENTSCHRIFT

(11) **EP 1 746 530 B1**
(45) Veröffentlichungstag und Bekanntmachung des Hinweises auf die Patenterteilung: **03.12.2008**
(21) Anmeldenummer: 05015802.1
(22) Anmeldetag: 20.07.2005
(51) Int. Cl.: G06K 19/077, B23Q 3/00

(54) **Vorrichtung zur Werkzeug- und Aggregatidentifikation**
Apparatus for the identification of tools
Dispositif pour l'identification des outils

(43) Veröffentlichungstag der Anmeldung: 24.01.2007
(73) Patentinhaber: Homag Holzbearbeitungssysteme AG, 72296 Schopfloch (DE)
(72) Erfinder: Gauss, Achim, 72280 Dornstetten/Hallwangen (DE); Sturm, Gotthilf, 72293 Glatten (DE); Schneider, Franz, 78667 Villingendorf (DE)
(74) Vertreter: HOFFMANN EITLE

(56) Entgegenhaltungen:
- EP-A- 0 230 642
- EP-A- 1 339 014
- US-A1- 2002 158 120

## Beschreibung

### Gebiet der Erfindung

Die vorliegenden Erfindung bezieht sich auf eine Vorrichtung zur berührungslosen Identifikation von Werkzeugen und Aggregaten, insbesondere von solchen Werkzeugen und Aggregaten, die in drehbaren Werkzeugaufnahmen von Bearbeitungsmaschinen gehaltert sind, so wie es zum Beispiel bei Bearbeitungszentren (BAZ) oder auch Durchlaufmaschinen der Fall ist.

### Stand der Technik

Bei Bearbeitungsmaschinen kommen, sowohl im Bereich der Metall- als auch der holzbearbeitenden Industrie, Identifikationssysteme zum Einsatz, mit denen Werkzeuge bzw. Aggregate (im Folgenden wird der Einfachheit halber nur von Werkzeugen gesprochen) identifiziert werden können. Bei diesen Systemen wird ein Chip, der verschiedene Werkzeugsowie Werkstück- und Maschinendaten enthalten kann, zumeist mittels Einkleben in der Mitte der Werkzeugaufnahme befestigt, sofern es sich dabei um Aufnahmen mit Hohlschaftkegel handelt. Beim selteneren Fall der nichthohlen Werkzeugaufnahmen wird der Chip mittig auf einer in die axiale Richtung gewandten Fläche des Schafts angebracht. Das mittige Anbringen, bevorzugt innerhalb des Hohlraums des Schaftes, schützt den Chip vor Beschädigung durch das Einspannen in der Maschine sowie durch Späne u.ä. während der Bearbeitung.

Zur Identifikation wird das Werkzeug an einer speziellen Schreib-/Lesestation vorbeigeführt, welche einen Schreib-/Lesekopf umfasst, der dann axial in die Aufnahme eintaucht bzw. an sie herangeführt wird, um Daten aus dem Chip auszulesen bzw. neue Daten auf ihn zu schreiben.

Im Falle von Chips mit magnetischer Aufzeichnung waren hierbei nur geringe Lese-/Schreibabstände (< 10 mm) möglich, die eine genaue Positionierung des Kopfes und den damit verbundenen Zeitaufwand erforderten. Des weiteren konnte das Auslesen/Beschreiben nur bei stillstehender Werkzeugaufnahme durchgeführt werden, und auch nur dann, wenn der Chip an einer leicht zugänglichen Stelle der Werkzeugaufnahme angebracht war. Ein Auslesen/Beschreiben im eingesetzten Zustand in der Spindel der Maschine und insbesondere während der Bearbeitung ist nicht möglich.

In jüngster Zeit hat auf dem Gebiet der Identifikation von Vorrichtungen und Gegenständen die RFID-Technologie (Radio Frequency Identification) an Bedeutung gewonnen. Zumeist werden hierbei sogenannte RFID-Tags (auch "Transponder" genannt), zum Beispiel in Form eines Aufklebers an den Vorrichtungen angebracht und von Schreib-/Lesegeräten, die geeignet innerhalb der Fabrikhalle oder an Lagerplätzen angebracht sind, ausgelesen/beschrieben. Der Transponder umfasst hierbei einen Chip, der Informationen speichert, und eine damit verbundene Antenne, die Signale vom Schreib-/Lesegerät in Form von elektromagnetischen Wellen empfangen kann und sie in den Chip einspeist. Der Chip wird dadurch passiv mit Strom versorgt und kann in Folge des Signals Daten über die Antenne empfangen bzw. ausgeben. Der große Vorteil der RFID-Technologie ergibt sich aus dem vergrößerten Leseabstand zwischen dem Schreib-/Lesegerät und dem Transponder, der primär von der Sendeleistung der Antennen abhängt. Von Nachteil ist, dass für größere Entfernungen, d.h. größere Sendeleistungen, teurere Schreib-/Lesegeräte notwendig sind
Obwohl der Einsatz von Transpondern auch für die Identifikation von Werkzeugen, insbesondere von rotierenden Werkzeugen, erwünscht ist, gestaltet sich dieser nicht unproblematisch. Um den Transponder vor Beschädigungen, beispielsweise durch Späne, zu schützen, wird dieser oftmals an einem axialen Ende der Werkzeuge bzw. Werkzeugaufnahmen angebracht, das beim Einwechseln in eine Bearbeitungsspindel in diese eintaucht. Dies führt jedoch dazu, dass ein Auslesen der Transponder im eingewechselten Zustand nur mittels eines innerhalb der Bearbeitungsspindel angeordneten Schreib-/Lesegeräts vorgenommen werden kann, was komplizierte bauliche Maßnahmen im Inneren der Bearbeitungsspindel erfordert.

Auch bedingt ein einfaches Aufkleben eines Transponders auf ein rotierendes Werkzeug, dass zumindest in einem von der Werkzeugaufnahme bedingten Strahlungsschatten kein zuverlässiger Empfang möglich ist. Wenn zudem aus Gründen der Kostenminimierung nur geringe Sendeleistungen zum Einsatz kommen sollen, wie es zum Beispiel bei der Identifizierung von Werkzeugen in BAZs erwünscht ist, wirkt sich aufgrund der Drehung des Werkzeugs der veränderliche Abstand und die unbestimmte Position des Transponders zum Schreib-/Lesegerät negativ aus.

### Darstellung der Erfindung

Aufgabe der vorliegenden Erfindung ist es, eine Vorrichtung zur Identifikation von in einer Werkzeugaufnahme gehalterten Bearbeitungswerkzeugen oder Bearbeitungsaggregaten zu entwickeln, die die oben genannten Probleme vermeidet und eine zuverlässige, berührungslose, richtungs- und drehwinkelunabhängige Kommunikation ermöglicht.

Diese Aufgabe wird durch eine Vorrichtung mit dem Merkmalen des Anspruchs 1 gelöst. Vorteilhafte Ausführungen folgen aus den Unteransprüchen.

Eine erfindungsgemäße Vorrichtung zur Identifikation von in einer Werkzeugaufnahme gehalterten Bearbeitungswerkzeugen oder Bearbeitungsaggregaten umfasst mindestens eine um eine Längsachse drehbare Werkzeugaufnahme, mindestens einen mit der Werkzeugaufnahme verbundenen, jeweils aus einem Speicherchip und einer Antennenanordnung bestehenden RFID-Transponder sowie mindestens ein mit diesem kommunizierendes Schreib-/Lesegerät, wobei mindestens eine Antennenanordnung mindestens eines Speicherchips entlang des äußeren Umfangs der mindestens einen Werkzeugaufnahme angeordnet ist und die mindestens eine Antennenanordnung in mehreren Ringsegmenten um den äußeren Umfang der Werkzeugaufnahme angeordnet ist. Durch die Anordnung der Antenne entlang des äußeren Umfangs der Werkzeugaufnahme kann eine Abschirmung, die die mögliche Entfernung zwischen Transponder und Schreib-/Lesekopf beschränkt, vermieden werden. Es können daher kostengünstige Schreib-/Lesegeräte niedriger Sendeleistung zum Einsatz kommen, die beispielsweise im Werkzeugmagazin an der Entnahmestelle positioniert werden und die Werkzeuge beim Einwechseln in die Spindel identifizieren. Bei einem Werkzeugwechselmagazin mit Umsetzer können die Schreib-/Lesegeräte am Umsetzer angeordnet werden, so dass das zu identifizierende Werkzeug ebenfalls unmittelbar vor der Spindel identifiziert werden kann. Auch ist es aufgrund der Erfindung möglich, das Schreib-/Lesegerät spindelnah an der Werkzeugmaschine so anzubringen, dass eine Kommunikation nicht nur im ruhenden Zustand, sondern auch während der Bearbeitung (ggf. bei verminderter Drehzahl) durchgeführt werden kann. Dabei können die mehreren Ringsegmente beispielsweise als diskrete Transponder ausgebildet sein, oder es kann sich um ein integriertes Transponderelement handeln, dessen Antennenanordnung in Ringsegmente aufgeteilt ist. Hierdurch ergibt sich eine erhöhte Ausfallsicherheit der Identifikationsvorrichtung bei guten Sende- und Empfangseigenschaften.

Bevorzugt weist die mindestens eine Werkzeugaufnahme einen zur Aufnahme in einer Bearbeitungsspindel vorgesehenen Schaft und einen Körper auf, wobei die mindestens eine Antennenanordnung entlang des äußeren Umfangs des Körpers der Werkzeugaufnahme angeordnet ist. Da der Schaft eingespannt wird und dadurch zu einem gewissen grad eine (elektromagnetisch wirksame) Abschirmung erfährt, wird durch dieses Merkmal sichergestellt, dass die Antennenanordnung auch während der Bearbeitung unabgeschirmt frei zugänglich bleibt, was eine größere Reichweite der Kommunikation bzw. einer Verringerung der Sendeleistung erlaubt.

Die mindestens eine Antennenanordnung ist in vorteilhafter Weise derart an dem äußeren Umfang angeordnet, dass sie in jeder Drehstellung der Werkzeugaufnahme um seine Längsachse aus einer vorbestimmten Richtung senkrecht zur Drehachse zumindest abschnittsweise sichtbar ist. Damit ist eine richtungs- und drehwinkelunabhängige Kommunikation zwischen Schreib-/Lesegerät und Transponder möglich, was die zur zuverlässigen Kommunikation erforderliche Sendeleistung weiter verringert und so die Kosten senkt.

Nach einer bevorzugten Ausführungsform der vorliegenden Erfindung ist die mindestens eine Antennenanordnung ringförmig um den äußeren Umfang der Werkzeugaufnahme angeordnet, so dass eine Kommunikation aus jeder Richtung unabhängig vom Drehwinkel und bei konstantem Abstand möglich ist. Dies erlaubt eine weitere Senkung der erforderlichen Sendeleistung und damit eine weitere Kostenverringerung.

In einer weiteren vorteilhaften Ausführungsform sind zwei Transponder diametral gegenüberliegend um den äußeren Umfang der Werkzeugaufnahme angeordnet. Dadurch wird durch Redundanz eine zuverlässige Kommunikation auch im Fall eines Defekts eines Transponders sichergestellt.

Bevorzugt sind in dem Speicherchip des mindestens einen RFID-Transponders Informationen gespeichert, die ausgewählt sind aus der Gruppe umfassend die Identifikationsnummer, Art, Abmessungen, maximale Drehzahl, maximaler Vorschub, Einsatzhäufigkeit, Standweg und Lebensdauer des Bearbeitungswerkzeugs bzw. Bearbeitungsaggregats. Es können somit Fehlfunktionen (z.B. aufgrund falscher Drehzahl) oder der Einsatz falscher Werkzeuge vermieden werden, so dass vor allem die Sicherheit der Werkzeugmaschine erheblich erhöht wird. Durch Übernahme der Werkzeugdaten in die Datenbank der Maschinensteuerung wird zudem die Bedienfreundlichkeit verbessert. Da aufgrund von Geometrieüberschneidungen bei großen Werkzeugen nicht jeder Speicherplatz im Werkzeugmagazin bestückt werden kann, erlaubt das Auslesen der Werkzeugabmessungen auch, dass die Speicherplatzbestückung und damit der Werkzeugwechsler optimiert wird.

Gemäß einer Weiterbildung kommt die erfindungsgemäße Vorrichtung in einer Bearbeitungsvorrichtung zur Bearbeitung plattenförmiger Werkstücke, die insbesondere aus Holz, Holzwerkstoffen oder dergleichen bestehen, zum Einsatz, wie beispielsweise einem Bearbeitungszentrum oder einer Durchlaufmaschine. Die Bearbeitungsvorrichtung umfasst neben der oben diskutierten Vorrichtung mindestens eine Bearbeitungsspindel zum bevorzugt automatischen Ein- und Auswechseln von Werkzeugaufnahmen mit Bearbeitungswerkzeugen oder Bearbeitungsaggregaten, und mindestens einen Speicher zum Ablegen und Aufnehmen von Werkzeugaufnahmen mit Bearbeitungswerkzeugen oder Bearbeitungsaggregaten, wobei es sich bei dem Speicher beispielsweise um ein an der Vorrichtung angebrachtes Magazin oder auch einen separat angeordneten Werkzeugschrank handeln kann.

Bei der Bearbeitungsvorrichtung ist das mindestens eine Schreib-/Lesegerät derart ausgelegt und angeordnet, dass es mit dem mindestens einen RFID-Transponder der Werkzeugaufnahmen im in die Spindel eingewechselten Zustand und/oder im in das Werkzeugmagazin abgelegten Zustand der jeweiligen Werkzeugaufnahme kommunizieren kann.

Vorteilhafterweise sind bei dem erfindungsgemäßen Bearbeitungszentrum mindestens zwei Schreib-/Lesegeräte vorgesehen, von denen jeweils eines im Bereich mindestens einer Bearbeitungsspindel und eines im Bereich mindestens eines Werkzeugmagazins vorgesehen ist.

### Kurze Beschreibung der Zeichnungen

- Fig. 1: zeigt schematisch eine teilweise geschnittene Seitenansicht einer Werkzeugaufnahme als Ausführungsform der vorliegenden Erfindung;
- Fig. 2: zeigt schematisch eine Draufsicht eines Bearbeitungszentrums als Ausführungsform der vorliegenden Erfindung.

### Ausführliche Beschreibung bevorzugter Ausführungsformen

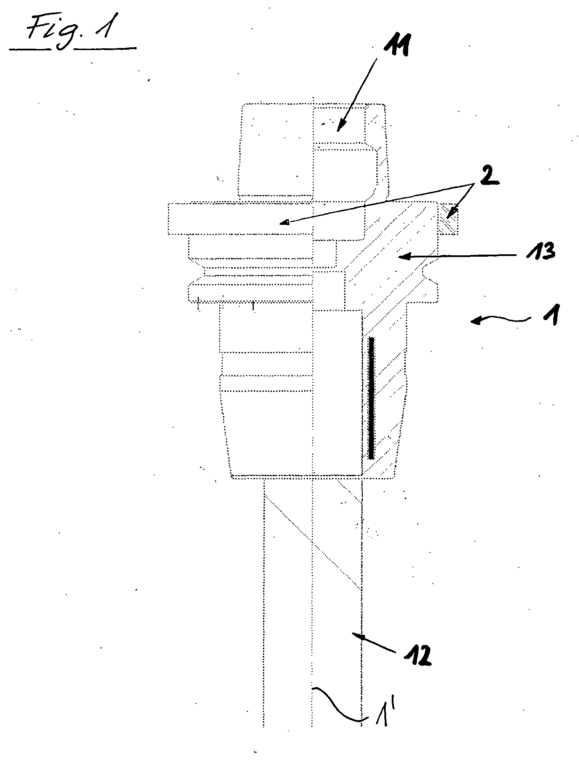

Fig. 1 zeigt schematisch eine teilweise geschnittene Seitenansicht einer Werkzeugaufnahme 1 als Ausführungsform der vorliegenden Erfindung. In dem in Figur 1 gezeigten Ausführungsbeispiel weist die Werkzeugaufnahme 1 an ihrem einen Ende einen Hohlschaftkegel 11 auf, der zum Befestigen an der Spindel (nicht gezeigt) einer Bearbeitungsvorrichtung vorgesehen ist.

Am anderen, gegenüberliegenden Ende der Werkzeugaufnahme 1 ist ein Werkzeug 12, zum Beispiel ein Schaftfräser, eingespannt. Dazwischen befindet sich der Körper 13 der Werkzeugaufnahme 1, wobei hier der Außendurchmesser der Werkzeugaufnahme am größten ist.

Am äußeren Umfang des Körpers 13 der Werkzeugaufnahme 1 ist ringförmig ein Transponder 2 angeordnet, wobei dessen Antennenanordnung (nicht gezeigt) ringförmig um den Umfang der Werkzeugaufnahme gelegt ist. Beim Verspannen der Werkzeugaufnahme mit der Spindel bleibt somit der Transponder zugänglich, und aufgrund seiner Ringform ist ein Auslesen/Beschreiben durch ein Schreib-/Lesegerät (in Fig. 1 nicht gezeigt) richtungs- und drehwinkelunabhängig möglich.

Neben der in Fig. 1 gezeigten Ausführungsform kann der Transponder 2 auch auf vielfältige andere Arten an dem äußeren Umfang der Werkzeugaufnahme 1 angeordnet sein. Bevorzugt ist es dabei, dass die mindestens eine Antennenanordnung des Transponders 2 derart an dem äußeren Umfang angeordnet ist, dass sie in jeder Drehstellung der Werkzeugaufnahme um seine Längsachse aus einer vorbestimmten Richtung senkrecht zur Drehachse 1' zumindest abschnittsweise sichtbar ist. Dies kann auf unterschiedlichste Art und Weise erreicht werden, wobei die in den Patentansprüchen 4 bis 6 beanspruchten Anordnungen sich als besonders vorteilhaft erwiesen haben.

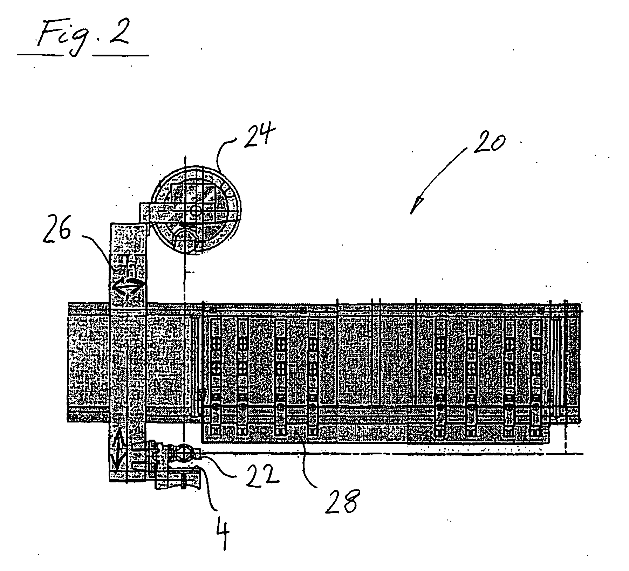

Ein Bearbeitungszentrum 20 ist in Fig. 2 schematisch als Ausführungsform der vorliegenden Erfindung gezeigt. Das Bearbeitungszentrum 20 dient zur Bearbeitung plattenförmiger Werkstücke, die insbesondere aus Holz, Holzwerkstoffen oder dergleichen bestehen, wie beispielsweise Korpusteilen, Küchenfronten oder dergleichen. Die Bearbeitungsvorrichtung 20 ist in der vorliegenden Ausführungsform nach Art eines Bearbeitungszentrums aufgebaut, obgleich es sich im Rahmen der vorliegenden Erfindung auch um eine Durchlaufmaschine oder dergleichen handeln kann.

Die Bearbeitungsvorrichtung 20 umfasst eine Bearbeitungsspindel 22, die verfahrbar entlang eines Auslegers bzw. Portals 26 angeordnet ist. An der gegenüberliegenden Seite des Portals 26 ist ein Werkzeugmagazin 24 vorgesehen, beispielsweise in Form eines Tellerwechslers, das dazu dient, Bearbeitungswerkzeuge (bzw. Bearbeitungsaggregate) aufzunehmen und automatisch an die Bearbeitungsspindel 22 zu übergeben. Der Ausleger bzw. das Portal 26 ist entlang eines Grundkörpers der Bearbeitungsvorrichtung 20 oberhalb eines Aufspanntisches 28 verfahrbar, wobei der Aufspanntisch 28 dazu dient, die zu bearbeitenden plattenförmigen Werkstücke während der Bearbeitung zu halten.

Ferner umfasst die Bearbeitungsvorrichtung ein Schreib-/Lesegerät 4, das benachbart zu der Bearbeitungsspindel 22 vorgesehen ist und mit dieser entlang des Auslegers bzw. Portals 26 verfahren wird. Alternativ oder zusätzlich ist es ebenso möglich, dass ein Schreib-/Lesegerät 4 im Bereich des Werkzeugmagazins 24 angeordnet ist.

Ferner kommen bei der in Fig. 2 gezeigten Bearbeitungsvorrichtung Werkzeugaufnahmen 1 zum Einsatz, wie Sie oben unter Bezugnahme auf Fig. 1 beschrieben worden sind.

Obgleich in Fig. 2 nicht ausdrücklich gezeigt, steht das Schreib-/Lesegerät 4 mit einer Steuereinrichtung in Verbindung, die den Betrieb der Bearbeitungsvorrichtung 20, insbesondere der Bearbeitungsspindel 23 und des Werkzeugmagazins 24, steuert. Auf diese Weise kann der Betrieb der erfindungsgemäßen Bearbeitungsvorrichtung deutlich vereinfacht werden, da die Steuereinrichtung über das Schreib-/Lesegerät 4 stets auslesen bzw. überprüfen kann, welche Art von Werkzeug bzw. Bearbeitungsaggregat in die Bearbeitungsspindel 22 eingewechselt ist, für welche Bearbeitung sich dieses eignet, in welchem Zustand sich diese befindet etc. Zu diesem Zweck sind in dem Speicherchip des mindestens einen Transponders zwei der Werkzeugaufnahme 1 Informationen gespeichert, die ausgewählt sind aus der Gruppe umfassend die Identifikationsnummer, Art, Abmessungen, maximale Drehzahl, maximaler Vorschub, Einsatzhäufigkeit, Standweg, Lebensdauer etc. des Bearbeitungswerkzeugs bzw. Bearbeitungsaggregats. Ferner ermöglichen diese Informationen eine optimale Verwaltung des Werkzeugmagazins und der Bearbeitungswerkzeuge bzw. Bearbeitungsaggregate selbst. Hierdurch ergibt sich ein zügiger und störungsfreier Betrieb der erfindungsgemäßen Bearbeitungsvorrichtung während gleichzeitig eine hohe Variabilität erreicht wird.

## Patentansprüche

1. Vorrichtung zur Identifikation von in einer Werkzeugaufnahme gehalterten Bearbeitungswerkzeugen (12) oder Bearbeitungsaggregaten, umfassend
mindestens eine um eine Längsachse drehbare Werkzeugaufnahme (1),
mindestens einen mit der Werkzeugaufnahme (1) verbundenen, jeweils aus einem Speicherchip und einer Antennenanordnung bestehenden RFID-Transponder (2), sowie
mindestens ein mit diesem kommunizierendes Schreib-/Lesegerät (4),
wobei mindestens eine Antennenanordnung mindestens eines Speicherchips entlang des äußeren Umfangs der mindestens einen Werkzeugaufnahme (1) angeordnet ist,
**dadurch gekennzeichnet, dass**
die mindestens eine Antennenanordnung in mehreren Ringsegmenten um den äußeren Umfang der Werkzeugaufnahme (1) angeordnet ist.

2. Vorrichtung nach Anspruch 1, **dadurch gekennzeichnet, dass** die mindestens eine Werkzeugaufnahme (1) einen zur Aufnahme in einer Bearbeitungsspindel (22) vorgesehenen Schaft oder Hohlschaftkegel (11) und einen Körper (13) aufweist, wobei die mindestens eine Antennenanordnung entlang des äußeren Umfangs des Körpers (13) der Werkzeugaufnahme (1) angeordnet ist.

3. Vorrichtung nach Anspruch 1 oder 2, **dadurch gekennzeichnet, dass** die mindestens eine Antennenanordnung derart an dem äußeren Umfang angeordnet ist, dass sie in jeder Drehstellung der Werkzeugaufnahme (1) um seine Längsachse aus einer vorbestimmten Richtung senkrecht zur Drehachse (1') zumindest abschnittsweise sichtbar ist.

4. Vorrichtung nach einem der vorhergehenden Ansprüche, **dadurch gekennzeichnet, dass** die mindestens eine Antennenanordnung ringförmig um den äußeren Umfang der Werkzeugaufnahme (1) angeordnet ist.

5. Vorrichtung nach einem der vorhergehenden Ansprüche, **dadurch gekennzeichnet, dass** zwei Transponder diametral gegenüberliegend um den äußeren Umfang der Werkzeugaufnahme (1) angeordnet sind.

6. Vorrichtung nach einem der vorhergehenden Ansprüche, **dadurch gekennzeichnet, dass** in dem Speicherchip des mindestens einen RFID-Transponders (2) Informationen gespeichert sind, die ausgewählt sind aus der Gruppe umfassend die Identifikationsnummer, Art, Abmessungen, maximale Drehzahl, maximaler Vorschub, Einsatzhäufigkeit, Standweg und Lebensdauer des Bearbeitungswerkzeugs bzw. Bearbeitungsaggregats.

7. Bearbeitungsvorrichtung (20) zur Bearbeitung plattenförmiger Werkstücke, die insbesondere aus Holz, Holzwerkstoffen oder dergleichen bestehen, umfassend
eine Vorrichtung nach einem der vorhergehenden Ansprüche,
mindestens eine Bearbeitungsspindel (22) zum bevorzugt automatischen Ein- und Auswechseln von Werkzeugaufnahmen (1) mit Bearbeitungswerkzeugen (12) oder Bearbeitungsaggregaten,
mindestens einen Speicher (24) zum Ablegen und Aufnehmen von Werkzeugaufnahmen (1) mit Bearbeitungswerkzeugen (12) oder Bearbeitungsaggregaten,
wobei das mindestens eine Schreib-/Lesegerät (4) derart ausgelegt und angeordnet ist, dass es mit dem mindestens einen RFID-Transponder (2) der Werkzeugaufnahmen (1) im in die Spindel (22) eingewechselten Zustand und/oder im in das Werkzeugmagazin (24) abgelegten Zustand der jeweiligen Werkzeugaufnahme (1) kommunizieren kann.

8. Bearbeitungsvorrichtung nach Anspruch 7, **dadurch gekennzeichnet, dass** mindestens zwei Schreib-/Lesegeräte vorgesehen sind, von denen jeweils eines im Bereich mindestens einer Bearbeitungsspindel und eines im Bereich mindestens eines Werkzeugmagazins vorgesehen ist.

## Claims

1. Device for identification of machining tools (12) or machining units mounted in a toolhead, comprising at least one toolhead (1) which can be rotated about a longitudinal axis, at least one RFID transponder (2) connected to the toolhead (1) and consisting in each case of a memory chip and an antenna arrangement, and at least one read/write apparatus (4) communicating with the latter, wherein at least one antenna arrangement of at least one memory chip is arranged along the outer periphery of the at least one toolhead (1), **characterised in that** the at least one antenna arrangement is arranged in several ring segments around the outer periphery of the toolhead (1).

2. Device according to claim 1, **characterised in that** the at least one toolhead (1) has a shaft or hollow shaft cone (11) provided for accommodation in a machining spindle (22) and a body (13), wherein the at least one antenna arrangement is arranged along the outer periphery of the body (13) of the toolhead (1).

3. Device according to claim 1 or 2, **characterised in that** the at least one antenna arrangement is arranged on the outer periphery such that it is visible at least in sections from a predetermined direction vertically to the axis of rotation (1') in any rotary position of the toolhead (1) about its longitudinal axis.

4. Device according to one of the preceding claims, **characterised in that** the at least one antenna arrangement is arranged annularly around the outer periphery of the toolhead (1).

5. Device according to one of the preceding claims, **characterised in that** two transponders are arranged diametrally opposite around the outer periphery of the toolhead (1).

6. Device according to one of the preceding claims, **characterised in that** information, which is selected from the group comprising the identification number, type, dimensions, maximum speed, maximum feed, frequency of use, tool life travel and service life of the machining tool or machining unit, is stored in the memory chip of the at least one RFID transponder (2).

7. Machining device (20) for machining panel-like workpieces, which consist in particular of wood, derived timber products or the like, comprising a device according to one of the preceding claims, at least one machining spindle (22) for preferably automatic changing and exchanging of toolheads (1) with machining tools (12) or machining units, at least one memory (24) for laying down and accommodating toolheads (1) with machining tools (12) or machining units, wherein the at least one read/write apparatus (4) is designed and arranged such that it may communicate with the at least one RFID transponder (2) of the toolheads (1) in the state changed into the spindle (22) and/or in the state of the particular toolhead (1) laid down into the tool magazine (24).

8. Machining device according to claim 7, **characterised in that** at least two read/write apparatuses are provided, of which in each case one is provided in the region of at least one machining spindle and one in the region of at least one tool magazine.

## Revendications

1. Dispositif, pour l'identification d'outils d'usinage (12) ou groupes d'usinage, maintenus dans un réceptacle à outil, comprenant :
au moins un réceptacle à outil (1), susceptible de tourner autour d'un axe longitudinal,
au moins un transpondeur RFID (2), relié au réceptacle à outil (1), chacun composé d'une puce électronique à mémoire et d'un agencement d'antenne, ainsi qu'
au moins un appareil d'écriture/lecture (4), communiquant avec ce transpondeur RFID,
où au moins un agencement d'antenne, au moins d'une puce à mémoire, est disposé le long de la périphérie extérieure du au moins un réceptacle à outil (1)
**caractérisé en ce que**
le au moins un agencement d'antenne est disposé en plusieurs segments annulaires, autour de la périphérie extérieure du réceptacle à outil (1).

2. Dispositif selon la revendication 1, **caractérisé en ce que** le au moins un réceptacle à outil (1) présente une queue ou cône de queue creux (11), prévu(e) pour être logée dans une broche d'usinage (22), et un corps (13), le au moins un agencement d'antenne étant disposé le long de la périphérie extérieure du corps (13) du réceptacle à outil (1)

3. Dispositif selon la revendication 1 ou 2, **caractérisé en ce que** le au moins un agencement d'antenne est disposé sur la périphérie extérieure, de manière que, en toute position en rotation du réceptacle à outil (1) autour de son axe longitudinal, il puisse être vu, au moins par tronçons, depuis une direction prédéterminée, perpendiculairement à l'axe de rotation (1').

4. Dispositif selon l'une des revendications précédentes, **caractérisé en ce que** le au moins un agencement d'antenne est disposé en forme d'anneau, autour de la périphérie extérieure du réceptacle à outil (1).

5. Dispositif selon l'une des revendications précédentes, **caractérisé en ce que** deux transpondeurs sont disposés de façon diamétralement opposée, autour de la périphérie extérieure du réceptacle à outil (1).

6. Dispositif selon l'une des revendications précédentes, **caractérisé en ce que,** dans la puce électronique à mémoire du au moins un transpondeur RFID (2), sont mémorisées des informations, sélectionnées à partir du groupe comprenant le numéro d'identification, le genre, les dimensions, la vitesse de rotation maximale, l'avance maximale, la fréquence d'utilisation, la tenue d'outil et la durée de vie de l'outil d'usinage ou du groupe d'usinage.

7. Dispositif d'usinage (20), pour l'usinage de pièces d'oeuvre en forme de plaques, composées en particulier de bois, de matériaux ligneux ou analogues, comprenant :
Un dispositif selon l'une des revendications précédentes,
au moins une broche d'usinage (22) pour le remplacement et le changement, de préférence automatiques, de réceptacles à outil (1) avec des outils d'usinage (12) ou des groupes d'usinage,
au moins un stockage (24), pour déposer et conserver des réceptacles à outil (1) avec des outils d'usinage (12) ou des groupes d'usinage,
le au moins un appareil d'écriture/lecture (4) étant conçu et disposé de manière qu'il puisse communiquer avec le au moins un transpondeur RFID (2) des réceptacles à outil (1), lorsque le réceptacle à outil (1) respectif se trouve à l'état introduit dans la broche (22) et/ou à l'état déposé dans le magasin à outils (24).

8. Dispositif d'usinage selon la revendication 7, **caractérisé en ce que** sont prévus au moins deux appareils d'écriture/lecture, dont chaque fois l'un est prévu dans la zone d'au moins une broche d'usinage et un autre est prévu dans la zone d'au moins un magasin à outils.
